# EUROPEAN PATENT SPECIFICATION

(11) **EP 1 079 014 B1**
(45) Date of publication and mention of the grant of the patent: **26.07.2006**
(21) Application number: 00906646.5
(22) Date of filing: 02.03.2000
(51) Int. Cl.: D06F 39/12, D06F 37/04, D06F 37/30, D06F 25/00, D06F 21/04, D06F 37/26

(54) **DRUM TYPE WASHING MACHINE**
TROMMELWASCHMASCHINE
MACHINE LAVER TAMBOUR

(30) Priority: 15.03.1999 JP 6839699
(43) Date of publication of application: 28.02.2001
(73) Proprietor: KABUSHIKI KAISHA TOSHIBA, Kawasaki-shi, Kanagawa 210-0913 (JP)
(72) Inventor: ITO, Masumi, Seto-shi, Aichi 489-0983 (JP); YAMAZAKI, Fumitaka, Owariasahi-shi, Aichi 488-0011 (JP); KAWABATA, Shinichiro, Seto-shi, Aichi 489-0912 (JP); SASANO, Kiyomi, Ichinomiya-shi, Aichi 491-0923 (JP)
(74) Representative: Midgley, Jonathan Lee
(86) International application number: PCT/JP2000/001249
(87) International publication number: WO 2000/055413

(56) References cited:
- JP-A- 4 220 291
- JP-A- 5 084 388
- JP-A- 5 131 075
- JP-A- 6 007 590
- JP-A- 8 215 470
- JP-A- 9 253 385
- JP-A- 50 066 973
- JP-U- 51 017 373
- JP-Y- 57 027 434
- US-A- 2 296 260
- US-A- 3 509 742

## Description

This invention relates to a drum type washing machine including an outer cabinet and a water tub suspended from elastic supporting mechanisms in the cabinet.

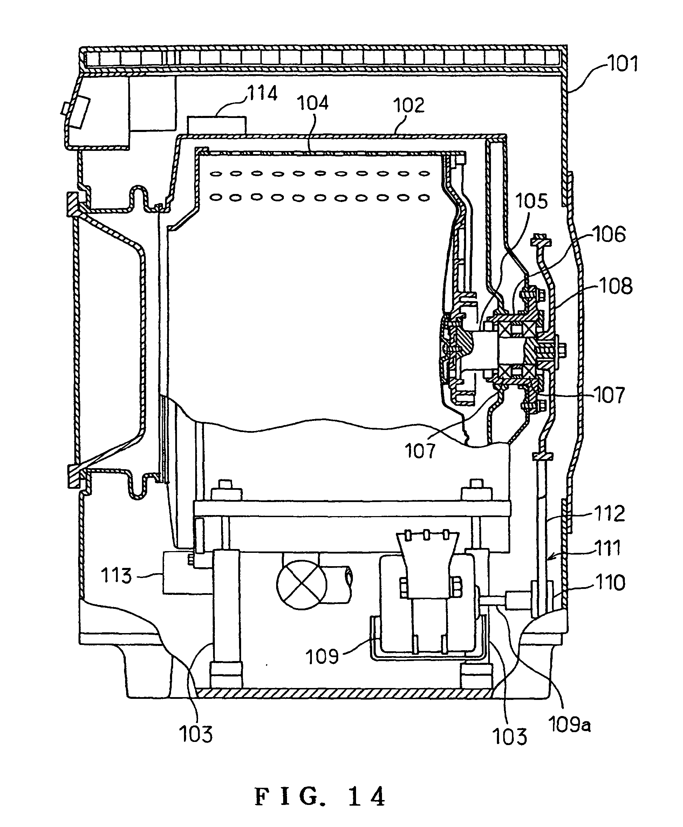

FIG. 14 illustrates one of conventional drum type washing machines. The illustrated washing machine comprises an outer cabinet 101 and a water tub 102 elastically supported on a plurality of suspension mechanisms in the cabinet. A rotating tub 104 is provided for rotation about a horizontal axis in the water tub 102. A bearing housing 106 is mounted on the rear of the water tub 102. A bearing 107 is provided in the bearing housing 106. The rotating tub 104 has a rotational shaft 105 supported on the bearing 107. A driven pulley 108 is mounted on the rotational shaft 105.

An electric motor 109 is provided on a lower portion of the water tub 102. The motor 109 includes a rotational shaft 109a on which a driving pulley 110 is mounted. A transmission belt 112 extends between the pulleys 110 and 108. The pulleys 108 and 110 and the belt 112 constitute a belt transmission mechanism 111. In the above-described construction, torque developed by the motor 109 is transmitted via the belt transmission mechanism 111 to the rotating tub 104 so that the tub is rotated.

In the drum type washing machines such as described above, vibration or oscillation generally tends to be produced during a dehydrating or spinning operation since laundry stuck to the inner circumferential face of the rotating tub 104 is raised against gravity. For reduction in the vibration, counterbalances 113 and 114 are mounted on upper and lower front portions respectively so that load is uniformly applied to the suspension mechanisms 103 and so that weight distribution with respect to the centre of rotation of the rotating tub 104 is well balanced.

However, an amount of load received by each suspension mechanism 103 is varied due to an amount of the laundry accommodated in the rotating tub or the weight distribution with respect to the centre of rotation during the washing or dehydrating operation. As a result, a sufficient amount of vibration due to rotation of the rotating tub 104 cannot be reduced. Thus, a further improvement is desired.

Therefore, an object of the present invention is to provide a drum type washing machine in which the vibration due to rotation of the rotating tub can effectively be reduced.

US Patent 3509742 discloses a drum type washing machine with elastic supporting elements, according to the pre-characterising portion of Claim 1.

In order to reduce the amount of vibrations, the invention provides a drum type washing machine as defined in Claim 1.

There are several causes for the vibration due to rotation of the rotating tub. The inventors noted one of such causes, that is, a location of the centre of gravity of a member (a loading element) loading the elastic supporting element. The inventors carried out an experiment to confirm the relationship between the location of the center of gravity of the loading element and occurrence of vibration. The experiment shows that the vibration is reduced when the center of gravity of the loading element is located between substantially the middle of a back-and-forth dimension from the front to the rear of the rotating tub and the rear of the rotating tub. The above-described construction can reduce the vibration and noise produced during rotation of the rotating tub.

The drum type washing machine preferably further comprises a bearing assembly provided on the rear of the water tub for supporting the rotating tub for rotation. In this case, the loading element includes at least the water tub, rotating tub, bearing assembly and motor. Each of the water tub, rotating tub, bearing assembly and motor contributes to the center of gravity of the loading element since each of them has a relatively large weight. Accordingly, when the weights of these parts and locational relations among these parts are adjusted during the manufacture, the center of gravity of the loading element can be set at a suitable location.

Either the water tub or the rotating tub is preferably provided with a counterweight disposed ahead of substantially the middle of the dimension from the front to the rear of the rotating tub. A location and weight of the counterweight are adjusted such that the center of gravity of the loading element can easily be set at a suitable location.

The elastic supporting element preferably includes a pair of front supporting members disposed ahead of the center of gravity of the loading element and a pair of rear supporting members disposed in the rear of the center of gravity of the loading element, and a distance from each front supporting member to the center of gravity of the loading element is substantially equal to a distance from each rear supporting member to the center of gravity of the loading element. Consequently, the water tub can stably be supported on the two pairs of the supporting members disposed ahead of and in the rear of the center of gravity of the loading element. Moreover, since the load of the loading element is applied uniformly to the supporting members, the vibration due to rotation of the rotating tub can be reduced.

The elastic supporting element preferably includes a pair of front supporting members disposed ahead of the center of gravity of the loading element and a pair of rear supporting members disposed in the rear of the center of gravity of the loading element, and a distance from each front supporting member to the center of gravity of the loading element is substantially longer than a distance from each rear supporting member to the center of gravity of the loading element. Since a distance or span between the two pairs of the supporting members supporting the water tub is increased, the water tub can further stably be supported.

The load of the loading element is applied non-uniformly to the front and rear supporting members when the distance from the center of gravity of the loading element to each front supporting member differs from the distance from the center of gravity of the loading element to each rear supporting member. To solve the problem, the drum type washing machine preferably further comprises a first fixing member to which the front supporting member is fixed and a second fixing member to which the rear supporting member is fixed. In this construction, a mounting dimension from the first fixing member to a portion of each front supporting member on which the water tub is supported differs from a mounting dimension from the second fixing member to a portion of each rear supporting member on which the water tub is supported. Even when the load applied to each front supporting member differs from the load applied to each rear supporting member, the mounting dimension of each front supporting member differs from that of each rear supporting member such that the inclination of the loading element or the water tub can be adjusted.

Each front supporting member preferably includes a first spring to which the load of the loading element is applied, each rear supporting member includes a second spring to which the load of the loading element is applied, and each first spring has a free length differing from a free length of each second spring. In this construction, the free length of each first spring is set at a suitable value differing from that of the free length of each second spring such that the inclination of the water tub can be adjusted.

Each front supporting member preferably includes a first spring to which the load of the loading element is applied, each rear supporting member includes a second spring to which the load of the loading element is applied, and each first spring has a spring constant differing from a spring constant of each second spring. Consequently, the spring constants of the first and second springs are set at suitable values respectively so that the inclination of the water tub can be adjusted.

The elastic supporting element preferably includes a pair of the elastic supporting elements supporting the water tub either at a location which is substantially the same as the center of gravity of the loading element or at a location ahead of the center of gravity of the loading element. Consequently, the water tub can stably supported by a smaller number of elastic supporting elements.

The paired elastic supporting elements preferably include respective portions on which the water tub is supported. In this case, The portions are located between the center of gravity of the loading element and another center of gravity of the loading element in a case where an allowable maximum amount of laundry is accommodated in the rotating tub. The paired elastic supporting members support the water tub at their portions near the center of gravity in a case where laundry has been accommodated in the rotating tub. More specifically, the water tub can stably be supported on the elastic supporting elements.

The paired elastic supporting elements preferably include respective portions on which the water tub is supported, each of the portions assuming a location which is substantially the same as the center of gravity of the loading element in a case where substantially one half of an allowable maximum amount of laundry is accommodated in the rotating tub at a dehydration efficiency of about 50%.

The drum type washing machine generally performs a drying operation as well as the washing and dehydrating operations. A maximum amount of laundry to be dried in one drying operation is about one half of a maximum amount of laundry to be washed and dehydrated, that is, a maximum amount of laundry allowed to be accommodated in the rotating tub. Amounts of vibration and noise produced during the dehydrating operation are larger than during the washing and drying operations since the rotating tub is rotated at high speeds in the dehydrating operation. The inventors then regarded substantially one half of the maximum amount of laundry allowed to be accommodated in the rotating tub as a standard amount of laundry. Consequently, since the water tub can stably be supported by the elastic supporting element when the standard amount of laundry is dehydrated, the vibration and noise can effectively be reduced.

The drum type washing machine preferably further comprises a limiting element which limits a back-and-forth movement of the water tub. Consequently, the back-and-forth movement of the water tub which tends to result from the support of the water tub by the paired elastic supporting members can be limited.

The drum type washing machine preferably further comprises a balancer provided on the front of the rotating tub. This construction can prevent the rotating tub from being rotated with a swinging motion, thereby reducing the vibration and noise.

The rotating tub preferably has a rotation axis inclined rearwardly downward relative to a horizontal axis. In this construction, the laundry accommodated in the rotating tub are located deep in the tub such that the laundry is not displaced so much. Accordingly, the center of gravity of the loading element is not shifted so much and the balance of weight is difficult to lose. Consequently, the water tub can stably be supported by the elastic supporting element.

The invention will be described, merely by way of example, with reference to the accompanying drawings, in which:
FIG. 1 is a longitudinally sectional side view of a drum type washing machine;
FIG. 2 is an enlarged longitudinal section of a suspension mechanism;
FIG. 3 is a view similar to FIG. 1, showing the drum type washing machine of a second example;
FIG. 4 is a longitudinal section of front and rear suspension mechanisms;
FIG. 5 is a view similar to FIG. 1, showing the drum type washing machine of a third example;
FIGS. 6A and 6B are schematic views of the springs of the front and rear suspension mechanisms for the comparison of the lengths in the free state, respectively;
FIGS. 7A and 7B are schematic views of the springs of the front suspension mechanism subjected to load Wa and the rear suspension mechanism subjected to load Wb for the comparison of the loaded states;
FIG. 8 is a view similar to FIG. 1, showing the drum type washing machine of a fourth example;
FIG. 9 is a view similar to FIG. 1, showing the drum type washing machine of a first embodiment of the invention;
FIG. 10 is a view similar to FIG. 1, showing the drum type washing machine of a second embodiment of the invention;
FIG. 11 is a view similar to FIG. 1, showing the drum type washing machine of a further example;
FIG. 12 is a longitudinally sectional side view of a damper;
FIG. 13 is a view similar to FIG. 1, showing the drum type washing machine of a further example; and
FIG. 14 is a longitudinally sectional side view of a conventional drum type washing machine.

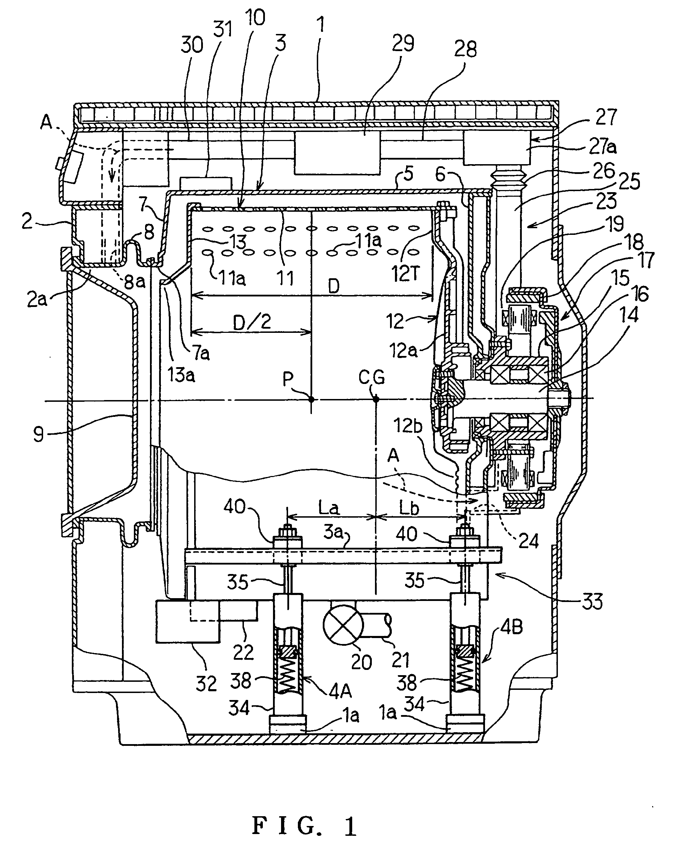

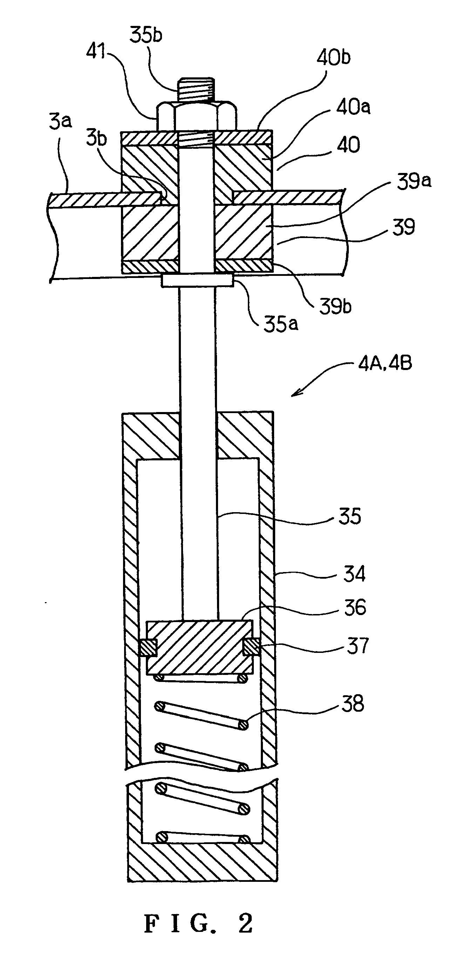

Several examples outside the scope of the present invention will be described, as background to the invention, with reference to the accompanying drawings. Referring to FIGS. 1 and 2, a drum type washing machine of a first example is shown. The washing machine is provided with a drying function. The washing machine comprises an outer cabinet 1 formed into the shape of a generally rectangular box. The cabinet 1 includes a front 2 having a substantially centrally formed access opening 2a through which laundry is put into and taken out of a rotating tub. A door 9 closing and opening the access opening 2a is mounted on the front 2 of the cabinet 1. The cabinet 1 encloses a cylindrical water tub 3 therein. The water tub 3 includes a body 5, a rear wall 6 and a front wall 7 each of which is made of a metal.

A pair of longitudinally extending supports 3a are fixed to a lower portion of the body 5 of the water tub 3. The supports 3a are spaced from each other. A pair of mounts 1a are secured to the front bottom of the cabinet 1. Another pair of mounts 1b are further secured to the rear bottom of the cabinet 1. A pair of front suspension mechanisms 4A serving as front supporting elements stand on the mounts 1a respectively. The front suspension mechanisms 4A have upper ends mounted to front portions of the supports 3a respectively. A pair of rear suspension mechanisms 4B serving as rear supporting elements stand on the mounts 1b respectively. The rear suspension mechanisms 4B have upper ends mounted to rear portions of the supports 3a respectively. The front and rear suspension mechanisms 4A and 4B constitute an elastic supporting element. The water tub 3 is elastically supported on the bottom of the casing 1 by the front and rear suspension mechanisms 4A and 4B. The mounts 1a serve as first fixing members, whereas the mounts 1b serve as second fixing members, respectively.

FIG. 2 shows the construction of each of the suspension mechanisms 4A and 4B. The suspension mechanisms 4A and 4B have the same construction. Each suspension mechanism comprises a cylinder 34 and a rod 35 having a lower portion inserted into the cylinder. The rod 35 includes a rod head 36 formed on a lower end thereof. A sliding ring 37 made of rubber, for example, is attached to an outer circumference of the rod head 36. The sliding ring 37 slides on an inner circumferential surface of the cylinder 34 when rod 35 is vertically moved. A compression coil spring 38 is provided under the rod head 36 in the cylinder 34.

The rod 35 has a threaded portion 35b formed on an upper end thereof. The rod 35 further has a holding flange 35a spaced from the threaded portion 35b. A pair of mounts 39 and 40 are provided between the threaded portion 35b and the flange 35a. Each mount comprises a rubber cushion 39a, 40a and a metal plate 39b, 40b. The upper portion of the rod 35 is inserted through a hole 3b formed through the support 3a. The support 3a is held between the cushions 39a and 40a, and a nut 41 is screwed down on the threaded portion 35b, whereby the suspension mechanisms 4A and 4B are mounted on the support 3a. The front wall 7 has a generally circular opening 7a as shown in FIG. 1. A generally cylindrical elastic member or bellows 8 made of rubber, for example, connect the opening 7a and the access opening 2a together.

A rotating tub 10 is rotatably mounted in the water tub 3. The rotating tub 10 includes a body 11, a rear wall 12 and a front wall 13 each of which is made of a metal. The body 11 has a number of perforations 11a and the front wall 13 has a generally circular opening 13a. The rear wall 12 has a plurality of vent holes (not shown). A rotating tub support 12a is secured to a rear side of the rear wall 12. A rotating tub shaft 14 serving as a rotational shaft is fixed to a rear side of the rear wall 12 so as to protrude rearward.

A bearing housing 15 is fixed to a substantially central rear wall 5 of the water tub 13 so that a front end of the bearing housing 15 extends through the rear wall 6. A bearing 16 is enclosed in the bearing housing 15. The rotating tub shaft 14 is rotatably mounted on the bearing 16. Thus, the shaft 14, the bearing housing 15 and the bearing 16 constitute a bearing assembly. Further, a stator 19 of a brushless motor 17 of the outer rotor type is fixed to an outer circumference of the bearing housing 15. A rotor 18 also constituting the brushless motor is fixed to a rear end of the shaft 14. The rotating tub 10 is directly driven by the motor 17.

A drain hole (not shown) is provided in the bottom of the water tub 3. A drain valve 20 and a flexible drain hose 21 are connected to the drain hole. The drain valve 20 is opened and closed by a drain valve motor (not shown). A water-supply valve supplying water into the water tub 3 and a flexible hose connected to the water-supply valve are provided in an upper interior of the cabinet 1. A heater 22 is further mounted on the bottom of the water tub 3. The heater 22 comprises a sheathed heater (not shown) provided in a recess (not shown) which is formed on the lower portion of the body 5 so as to outwardly protrude. Water in the water tub 3 is heated by the heater 22 into warm water.

A warm air supplier 23 is provided in the upper rear interior of the cabinet 1. The warm air supplier 23 comprises a heat exchanger 25, a fan 27 and a heater 29. The heat exchanger 25 is provided in the rear of the water tub 3. The fan 27 includes a casing 27a and fan blades (not shown) enclosed in the casing. The fan 27 is mounted on the inner face of the outer casing 1 so as to be located in the upper rear interior of the casing. The heater 29 is mounted on the inner face of the top of the casing 1 so as to be located substantially in the middle of a depth of the casing. The rear wall 6 of the water tub 3 is formed with a hot air return port 24. One of two ends of the heat exchanger 25 is connected to the port 24. The other end of the heat exchanger 25 is connected via an accordion connecting duct 26 to a suction side of the fan 27. A duct 28 connects an exhaust side of the fan 27 to the heater 29. The bellows 8 are formed with a hot air exhaust port 8a to which the heater 29 is connected via a duct 30.

Upon drive of the hot air supplier 23 in the drying operation, air in the rotating tub 10 is drawn through the return port 24 into the heat exchanger 25 as shown by arrow A in FIG. 1. The drawn air is returned through the connecting duct 26, the fan 27, the duct 28, the heater 29, the duct 30 and the exhaust port 8a into the rotating tub 10. As the result of such air circulation, the air in the rotating tub 10 is warmed and dehumidified by heat exchange, whereupon laundry in the tub is dried.

Two counterweights 31 and 32 are mounted on the front upper and lower portions of the water tub 3. The weights and positions of the counterweights 31 and 32 are previously set so that the center of gravity of a member for applying load to the suspension mechanisms 4A and 4B or the loading element 33 is located between substantially the middle of a dimension from the front wall to the rear wall of the rotating tub 10 and the rear wall 12 of the rotating tub 10, or more specifically, between the middle P of the back-and forth dimension from the front wall to the rear wall of the rotating tub 10 and a portion 12T of the rear wall 12 of the rotating tub 10. The aforesaid middle P is a location spaced from an inner circumferential face of the front wall 13 by about D/2 where D is a distance between the inner circumferential face of the front wall 13 and the portion 12T.

The loading element 33 will now be described. The suspension mechanisms 4A and 4B support the water tub 3 on the lower portion thereof. Accordingly, the suspension mechanisms 4A and 4B are subjected to a load of the water tub 3 and a load of a member directly or indirectly on the water tub 3. More specifically, the suspension mechanisms 4A and 4B are subjected to the loads of the water tub 3, the rotating tub 10, the rotational shaft 14, the bearing housing 15, the bearing 16, the motor 17, the drain valve 20, the heater 22, the heat exchanger 25 and the counterweights 31 and 32. These members thus constitute the loading element 33. The load of the loading element 33 is received by the springs 38 of the suspension mechanisms 4A and 4B and is further received by a frictional force between the sliding ring 37 and the inner circumferential face of the cylinder 34.

The center of gravity CG of the loading element 33 is set in the following manner. First, a preparatory center of gravity of the loading element 33 excluding the counterweights 31 and 32 is obtained. Each of the water tub 3, rotating tub 10, bearing assembly including the shaft 14, bearing housing 15 and the bearing 16, and motor 17 particularly have large weights respectively and occupy a large part of the loading element 33. Accordingly, the location of the preparatory center of gravity is roughly obtained on the basis of the weights and locations of the aforesaid components. Since the motor 17 is disposed in the rear of the water tub 3 in the embodiment, the preparatory center of gravity is located near the rear wall of the water tub 3. Then, the weights and locations of the counterweights 31 and 32 are adjusted so that the center of gravity CG of the loading element 33 is located between the middle P and the portion 12T. In the embodiment, the center of gravity CG of the loading element 33 is located substantially in the middle of the section between the point P and the portion 12T.

The front and rear suspension mechanisms 4A and 4B are disposed with the center of gravity CG of the loading element 33 being interposed therebetween. Reference symbol La designates a distance between the mounting position of the front suspension mechanism 4A on the support 3 and the center of gravity CG. Reference symbol Lb designates a distance between the mounting position of the rear suspension mechanism 4B on the support 3 and the center of gravity CG. Particularly in the embodiment, the distances La and Lb are set to be substantially equal to each other. That is, the center of gravity CG is spaced from the mounting positions by the distances La and Lb respectively as shown in FIG. 1.

The operation of the drum type washing machine will be described. In the washing operation, the motor 17 is rotated at a relatively low speed intermittently in the normal and reverse directions so that the rotating tub 10 is rotated intermittently in the normal and reverse directions. In the dehydrating operation, the motor 17 is rotated at high speeds so that the rotating tub 10 is rotated at the high speeds. Since the center of gravity CG of the loading element 33 is located between the center P and the rear end face 12T, the balance of the rotating tub 10 during rotation is improved such that the vibration can be reduced.

Further, the suspension mechanisms 4A and 4B are located in front and in the rear of the center of gravity of loading element 33. Consequently, the loading element 33 can stably be held. Particularly in the embodiment, the distance from the center of gravity CG to the front suspension mechanism 4A and the distance from the center of gravity CG to the rear suspension mechanism 4B are set to be substantially equal to each other. Accordingly, the load of the loading element 33 is applied uniformly to both suspension mechanisms 4A and 4B. Consequently, the loading element 33 can stably be held on the suspension mechanisms 4A and 4B, whereupon the vibration can further be reduced.

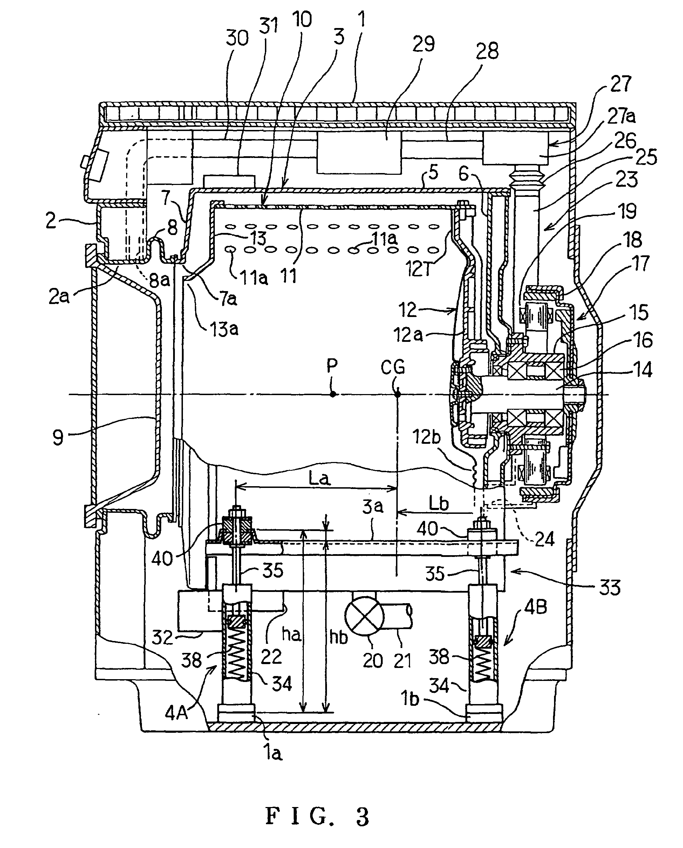

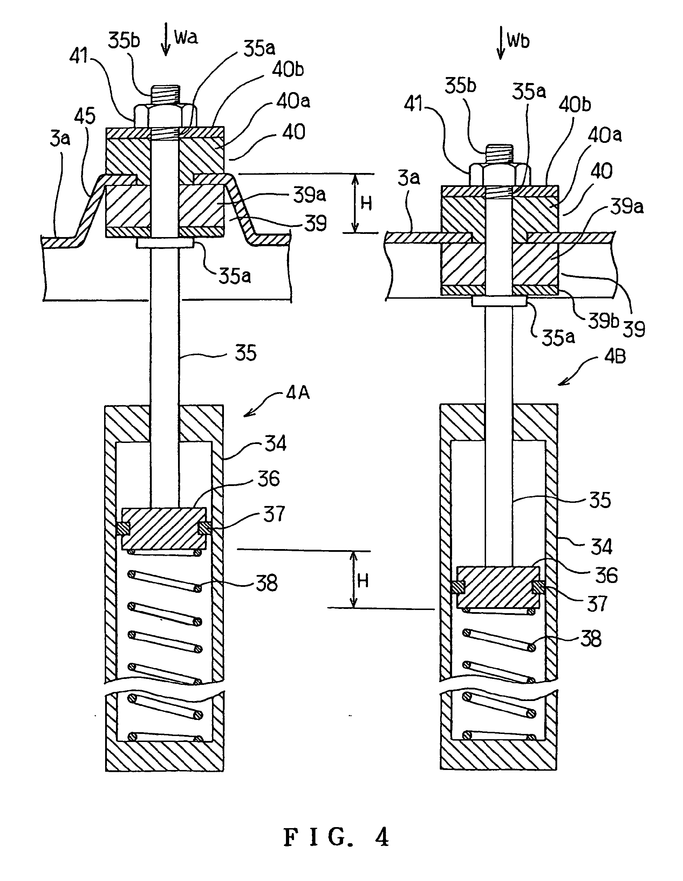

FIGS. 3 and 4 illustrate a second example. The differences between the first and second examples will be described. The identical or similar parts in the second example are labelled by the same reference symbols as in the first embodiment. In the second example, the distance La from the center of gravity to the front suspension mechanism 4A is set to be larger than the distance Lb from the center of gravity CG to the rear suspension mechanism 4B. The support 3a has an upwardly protruding concavity 45 formed on a portion thereof to which the front suspension mechanism 4A is mounted. Reference symbol H designates a dimension of the protruding portion of the concavity 45 as shown in FIG. 3. Accordingly, a distance ha from the mount 1a to a location where the front suspension mechanism 4A supports the water tub 3 is longer by the length H than a distance hb from the mount 1b to a location where the rear suspension mechanism 4B supports the water tub 3.

In the first example, the distance from the front - suspension mechanism 4A to the center of gravity CG of the loading element 33 is rendered equal to the distance from the rear suspension mechanism 4B to the center of gravity CG of the loading element 33 so that the loads applied to the respective suspension mechanisms 4A and 4B are equalized. However, since the center of gravity CG of the loading element 33 is located in the rear of the center P, the distance (La+Lb) between the front and rear suspension mechanisms 4A and 4B is shorter than the depth or the dimension between the front and rear walls of the water tub 3. As a result, the supporting of the water tub 3 by the suspension mechanisms 4A and 4b is reduced in the stability. In the second embodiment, however, the front and rear suspension mechanisms 4A and 4B support the water tub 3 at the front and rear ends. This increases a distance or span between both suspension mechanisms 4A and 4B. Consequently, the loading element 33 can be supported further stably.

The distance from the front suspension mechanism 4A to the center of gravity CG of the loading element 33 differs from the distance from the rear suspension mechanism 4b to the center of gravity CG of the loading element 33 in the second embodiment. Accordingly, the loads applied to both suspension mechanisms 4A and 4B respectively are unequal to each other. More specifically, the load (Wa) applied to the front suspension mechanism 4A is smaller than the load (Wb) applied to the rear suspension mechanism 4B (Wa<Wb). As a result, an amount of flexure of the spring 38 of the front suspension mechanism 4A when the distances ha and hb are equal to each other and the load applied to the spring 38 of the front suspension mechanism 4A is smaller than the load applied to the spring 38 of the rear suspension mechanism 4B. Consequently, the loading element 33 or the water tub 3 is inclined rearwardly downward. The difference in the amounts of flexure corresponds to the dimension of the protruding portion of the concavity 45.

In the second example, however, the distance ha of the front suspension mechanism 4A is set to be smaller by the length H than the distance hb of the rear suspension mechanism 4B. Consequently, the loading element 33 or the water tub 3 can be held substantially in the horizontal state by the suspension mechanisms 4A and 4B.

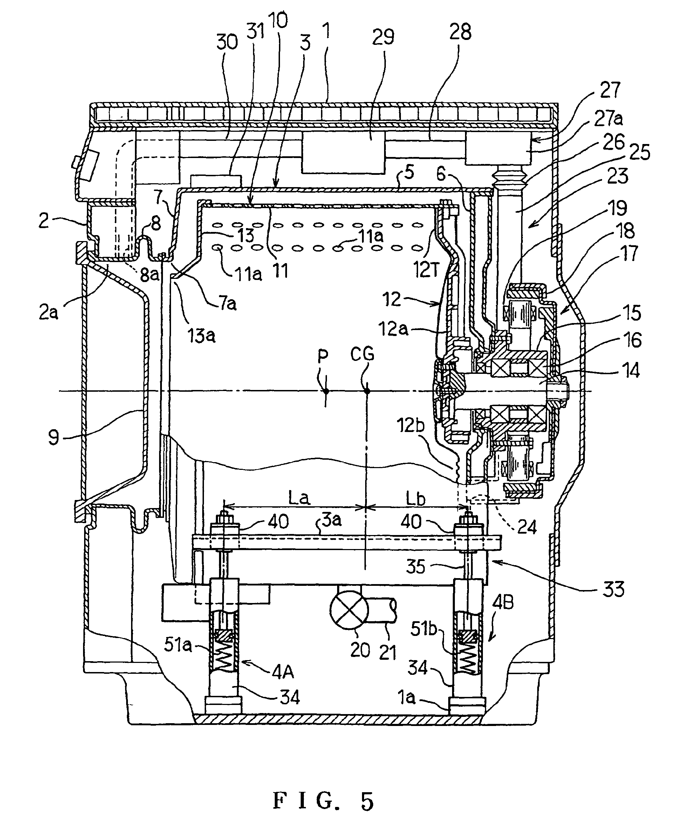

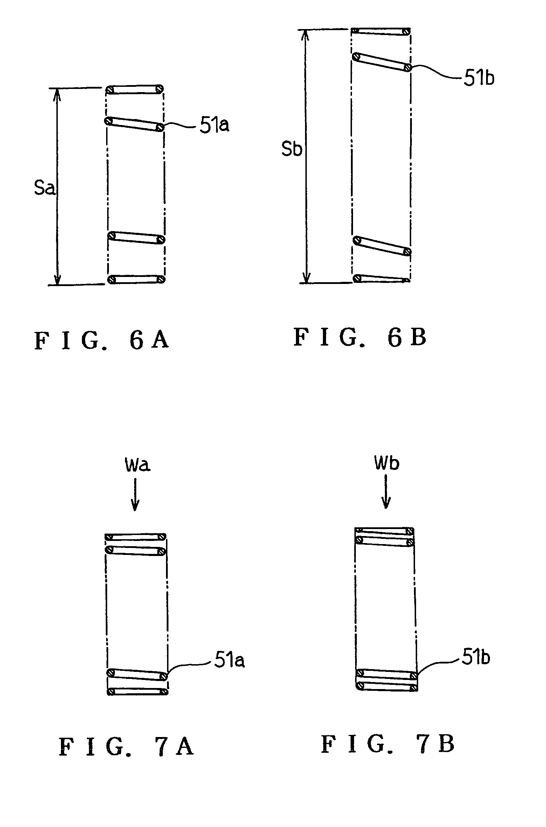

FIGS. 5 to 7 illustrate a third example. The difference between the second and third examples will be described. The distances ha and hb differ from each other in the second examples. In the third example, the front and rear suspension mechanisms 4A and 4B have constructions differing from each other, instead. More specifically, the front suspension mechanism 4A includes a first compression coil spring 51a instead of the spring 38, whereas the rear suspension mechanism 4B includes a second compression coil spring 51b instead of the spring 38. The first and second compression coil springs 51a and 51b have the same spring constant and free lengths different from each other. Thus, the free length Sb of the second compression coil spring 51b is larger than the free length Sa of the first compression coil spring 51a as shown in FIGS. 6A and 6B. Both free lengths Sa and Sb are set according to the loads Wa and Wb applied to the suspension mechanisms 4A and 4B respectively. In other words, the free lengths Sa and Sb are set so that the lengths of the springs 51a and 51b equal to each other when the loads Wa and Wb are applied to the front and rear suspensions 4A and 4B respectively, as shown in FIGS. 7A and 7B. Consequently, the water tub 3 can be held substantially in the horizontal state by the suspension mechanisms 4A and 4B.

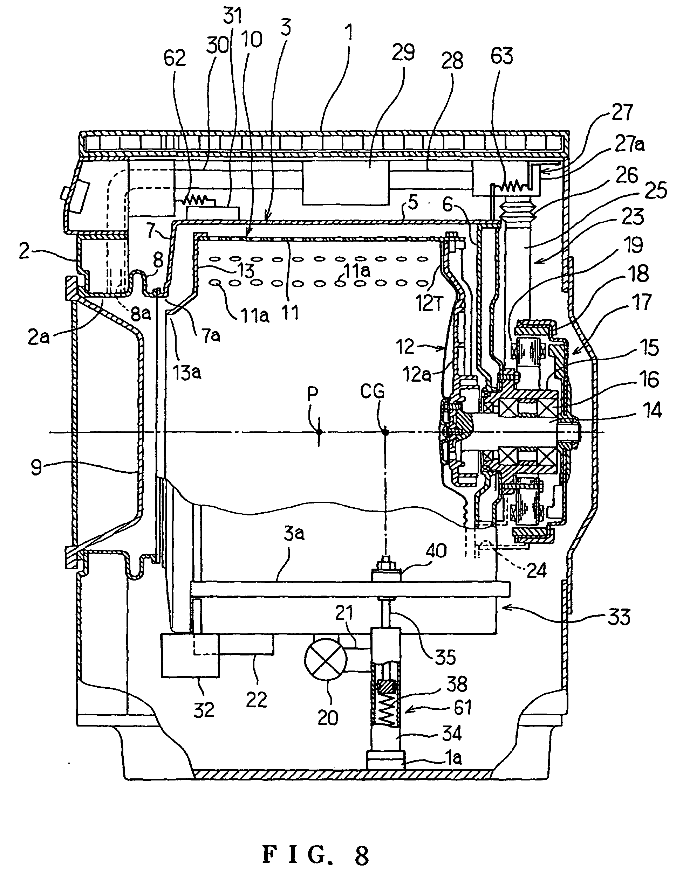

FIG. 8 illustrates a fourth example. Only the difference between the first and fourth examples will be described. In the fourth example, a single pair of suspension mechanisms 61 serving as the elastic supporting element are provided on the right and left sides of the water tub 3 respectively so as to correspond substantially to the center of gravity of the loading element 33. Each suspension mechanism 61 has the same construction as each of the suspension mechanisms 4A and 4B in the first example.

Two tension springs 62 and 63 serving as limiting elements are provided in the cabinet 1. The tension spring 62 has two ends connected to the front top of the water tub 3 and the inner face of the cabinet 1 respectively. The tension spring 63 has two ends connected to the rear top of the water tub 3 and the inner face of the cabinet 1 respectively. The tension springs 62 and 63 limit the back-and-forth movement of the water tub 3.

According to the fourth example, the weight balance of the loading element 33 with respect to the center of gravity CG thereof is not reduced even through the water tub 3 is supported by a pair of suspension mechanisms 61. Consequently, the vibration of the water tub 3 during rotation of the rotating tub 10 can be reduced. Furthermore, since the swing of the water tub 3 is reduced by the springs 62 and 63, amounts of vibration and noise can be reduced during rotation of the rotating tub 10.

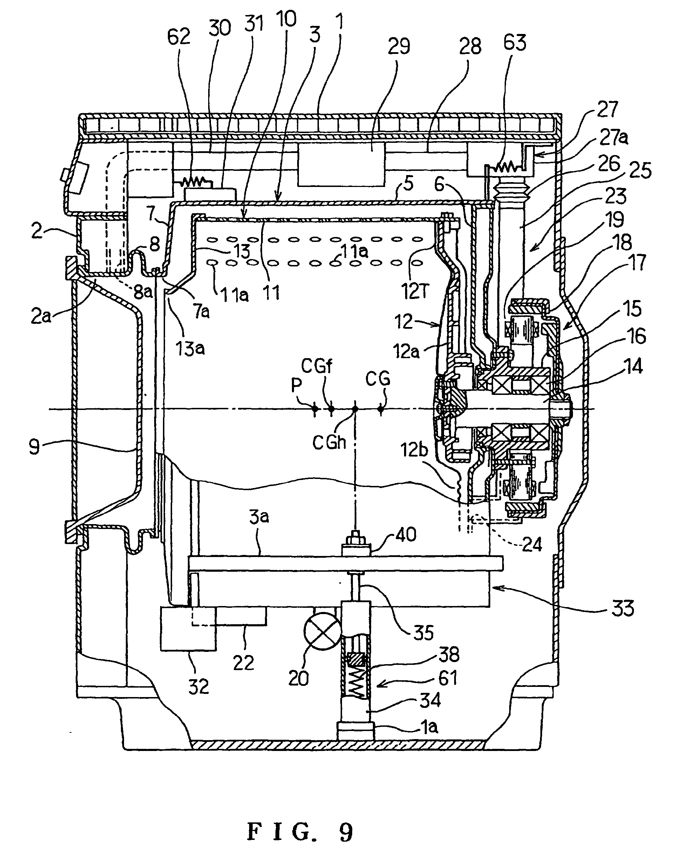

FIG. 9 illustrates a first embodiment of the invention. Only the difference between the fourth example and first embodiment will be described. In the first embodiment, the suspension mechanisms 61 are disposed ahead of the center of gravity CG of the loading element 33. More specifically, reference symbol CGf designates the center of gravity of the loading element 33 when an allowable maximum amount of laundry is accommodated in the rotating tub 10. Reference symbol CGh designates the center of gravity of the loading element 33 when one half of the allowable maximum amount of laundry is accommodated in the rotating tub 10 at a dehydration efficiency of about 50%. In this case, each suspension mechanism 61 is disposed so as to be positioned between the center of gravity CG and the center of gravity CGf of the loading element 33 or so as to correspond substantially to the center of gravity CGh.

When accommodated in the rotating tub 10, laundry is usually located in the middle of the interior thereof. Accordingly, when the laundry has been accommodated in the rotating tub 10, the center of gravity of the loading element 33 is moved slightly forward relative to the center of gravity CG before accommodation of the laundry. An amount of movement becomes maximum when the allowable maximum amount of laundry is accommodated in the rotating tub 10. In view of this, the supporting point of each suspension mechanism 61 is located between the center of gravity CG and the center of gravity CGh.

An allowable amount of laundry is one half of the maximum amount when the washing, dehydrating and drying operations are sequentially carried out. Thus, one half of a maximum capacity is regarded as a standard amount of laundry. Furthermore, a large vibration tends to be produced and the noise becomes maximum in the dehydrating operation wherein the rotating tub 10 is rotated at high speeds. In view of the foregoing, the support point of each suspension mechanism 61 for the water tub 3 is located so as to correspond substantially to the center of gravity CGh in the embodiment. Consequently, an amount of vibration can be reduced when the washing, dehydrating and drying operations are sequentially carried out or particularly when the dehydrating operation is carried out.

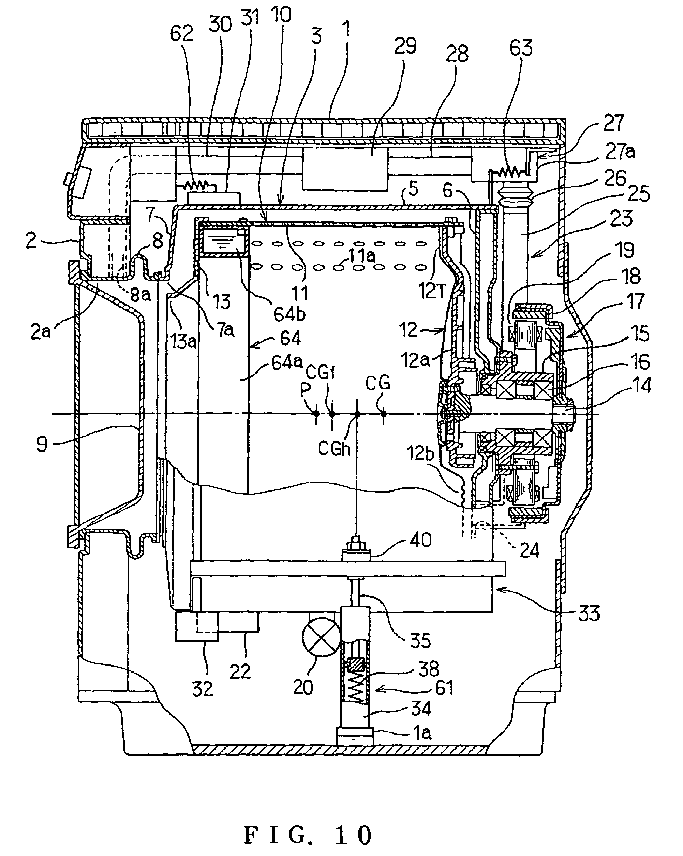

FIG. 10 illustrates a second embodiment of the invention. The second embodiment differs from the first embodiment in that a balancer 64 is provided on the front of the rotating tub 10. The balancer 64 comprises a container 64a and a predetermined amount of liquid or for example, water 64b filling the container and serving as a fluid. The container 64a is formed into an annular shape and has an interior divided into a number of chambers communicating with one another although the interior of the container is not shown. The balancer 64 serves as a component constituting the loading element 33. Accordingly, the weights of the counterweights 31 and 32 are set in view of the weight of the balancer 64.

According to the second embodiment, provision of the balancer 64 can prevent the rotating tub 10 from being rotated with a swinging motion, thereby reducing the vibration and noise. Furthermore, the balancer 64 serves as a member for adjusting the location of the center of gravity CG of the loading element 33 together with the counterweights 31 and 32.

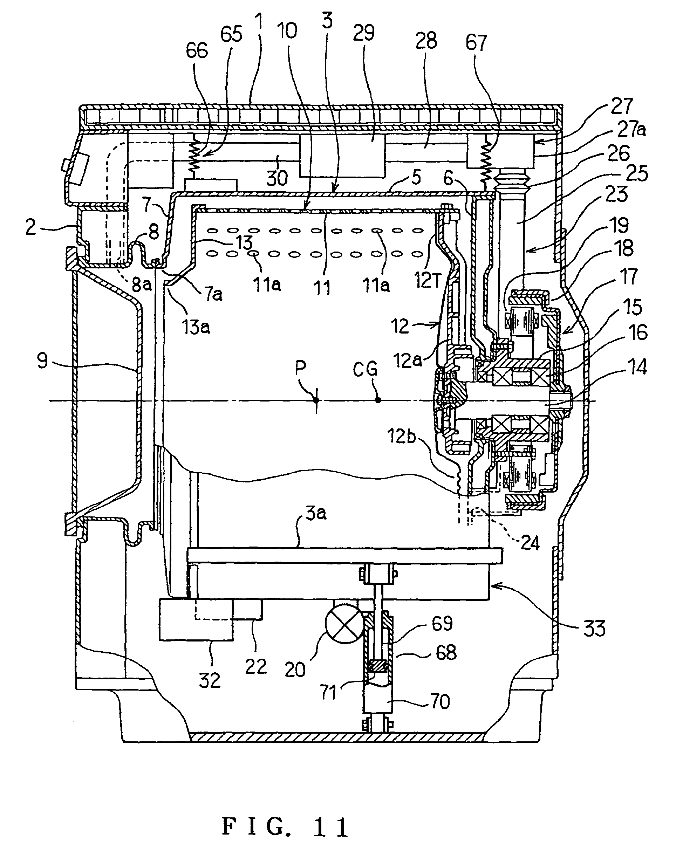

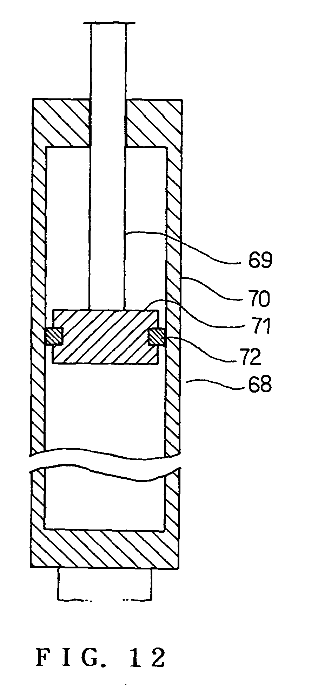

FIGS. 11 and 12 illustrate a further example. Only the difference from the second example will be described. The elastic supporting element comprises two tension coil springs 66 and 67 provided on the front top and the rear top of the water tub 3 respectively and a pair of dampers 68 provided between the lower portion of the water tub 3 and the bottom of the casing 1. The tension coil springs 66 and 67 have respective upper ends fixed to the inner face of the top of the casing 1. A distance between the spring 66 and the center of gravity CG of the loading element 33 is shorter than a distance between the spring 67 and the center of gravity CG. The spring 66 serves as the front supporting member and the spring 67 serves as the rear supporting member. The spring 66 has a smaller spring constant than the spring 67 so that the water tub 3 is maintained substantially in the horizontal state.

Each damper 68 comprises a cylinder 70 and a rod 69 having a lower portion inserted into the cylinder. The rod 69 includes an upper end connected to the support 3a provided on the lower portion of the water tub 3. The cylinder 70 of each damper 68 stands on the bottom of the casing 1. A rod head 71 is mounted on a lower end of the rod 69. A sliding ring 72 made of rubber, for example, is attached to an outer circumference of the rod head 71.

The water tub 3 is suspended from the springs 66 and 67 in the seventh embodiment. Each damper 68 has a function of damping the vibration of the loading element 33 such as the water tub 3 and a function of preventing back-and-forth movement of the water tub. The other construction of the drum type washing machine is the same as of the second example. Consequently, the same effect can be achieved.

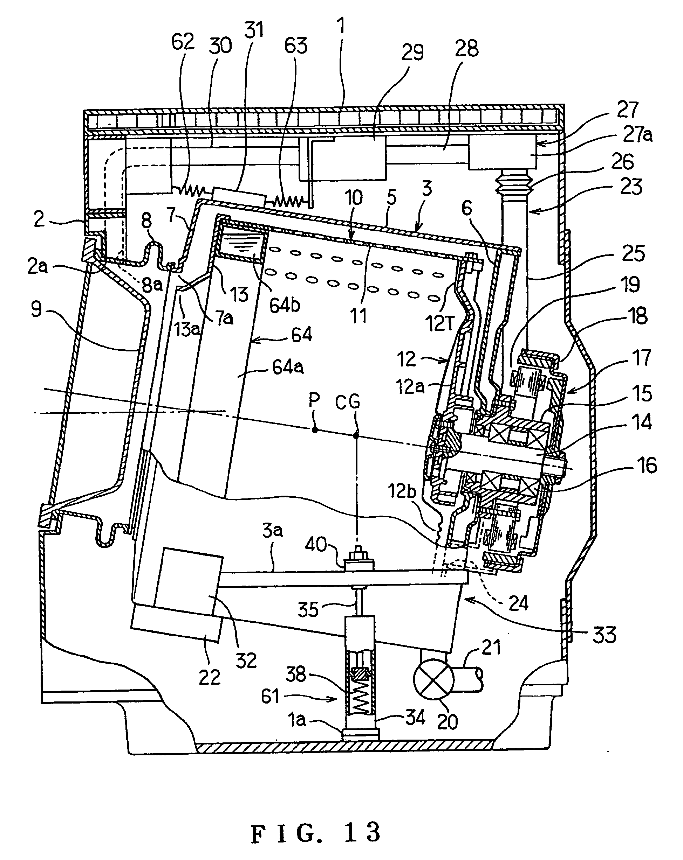

FIG. 13 illustrates a further example. Only the difference from the sixth example will be described. The water tub 3 is disposed rearwardly downward. The rotating tub 10 has an axis of rotation inclined rearwardly downward relative to a horizontal axis. A pair of generally horizontally extending supports 3a are fixed to the opposite sides of the lower portion of the water tub 3. Each suspension mechanism 61 has an upper end mounted to the support 3a. The mounting location of each suspension mechanism 61 on the support 3a is set to agree with the center of gravity CG of the loading element 33. Two tension coil springs 62 and 63 are provided on the front top of the water tub 3.

The laundry accommodated in the rotating tub 10 is one-sided to the rear interior of the tub since it is inclined rearwardly downward. Further, the center of gravity CG of the loading element 33 is located in the rear of the middle of the back-and-forth dimension of the rotating tub 10. Accordingly, the center of gravity CG of the loading element 33 does not vary so much even when laundry is accommodated in the rotating tub 10. This means that the balance in the weight of the loading element 33 is not affected so much by the weight of the laundry accommodated in the rotating tub 10. Consequently, the vibration produced during rotation of the rotating tub 10 can be reduced.

In the foregoing third example, the compression coil springs have the free lengths different from each other so that the suspension mechanisms 4A and 4B have the constructions differing from each other. For the same purpose, however, the compression coil springs may have spring constants differing from each other, instead. More specifically, where symbol ka designates a spring constant of the compression coil spring of the front suspension mechanism and symbol kb designates a spring constant of the compression coil spring of the rear suspension mechanism, the spring constants of the springs of the suspension mechanisms 4A and 4B are set so that a ratio Da of load Wa applied to the front suspension mechanism 4A to the spring constant ka is substantially equal to a ratio Db of load Wb applied to the rear suspension mechanism 4B to the spring constant kb. As a result, the water tub 3 can be maintained in the horizontal state by the suspension mechanisms 4A and 4B. Moreover, when the ratios Da and Db are substantially equal to each other, the rotational speeds of the rotating tub 10 at which the suspension mechanisms 4A and 4B resonate during rotation of the rotating tub respectively are substantially the same. In other words, since both suspension mechanisms 4A and 4B resonate at one and the same rotational speed, the number of times of resonance is reduced to one. Consequently, the vibration of the water tub 3 due to rotation of the rotating tub 10 can be reduced.

Further, both of the spring constants and free lengths of the compression coil springs may be changed for different constructions of the suspension mechanisms 4A and 4B.

Although the water tub 3 is held substantially horizontally in each of the second and third examples, it may be held to be inclined rearwardly downward.

The balancer 64 may contain a multitude of small balls in the container, instead of water.

## Claims

1. A drum type washing machine comprising an outer cabinet (1), a water tub (3) provided in the outer cabinet (1), a drum type rotating tub (10) provided for rotation in the water tub (3), the rotating tub (10) having a front and a rear, an electric motor (17) driving the rotating tub (10), an elastic supporting element (4A, 4B, 61, 66, 67, 68) elastically supporting the water tub (3), and a loading element (33) loading the supporting element (4A, 4B, 61, 66, 67, 68) and having a center of gravity CG located between substantially the middle P of a dimension from the front to the rear of the rotating tub (10) and the rear of the rotating tub (10), wherein the elastic supporting element (4A, 4B, 61, 66, 67, 68) includes a pair of elastic supporting elements (61) supporting the water tub (3) either at a location CGh which is substantially the same as the centre of gravity CG of the loading element (33) or at a location ahead of the center of gravity CG of the loading element (33), **characterised in that** the paired elastic supporting elements (61) include respective portions CGh on which the water tub (3) is supported, the portions CGh being located between the centre of gravity CG the loading element (33) and another center of gravit CGf of The loading element (33) in a case where an allowable amount of laundry is accommodated in the rotating tub (10).

2. The drum type washing machine according to Claim 1, **characterized by** a bearing assembly (14, 15, 16) provided on the rear of the water tub (3) for supporting the rotating tub (10) for rotation, and **characterized in that** the loading element (33) at least includes the water tub (3), rotating tub (10), bearing assembly (14, 15, 16) and motor (17).

3. The drum type washing machine according to Claim 1, **characterized in that** either the water tub (3) or the rotating tub (10) is provided with a counterweight (31, 32) disposed ahead of substantially the middle of the dimension from the front to the rear of the rotating tub (10).

4. The drum type washing machine according to Claim 1, **characterized by** a limiting element (62, 63) which limits a back-and-forth movement of the water tub (3).

5. The drum type washing machine according to Claim 1, **characterized by** a balancer (64) provided on the front of the rotating tub (10).

6. The drum type washing machine according to Claim 1, **characterized in that** the rotating tub (10) has an axis of rotation inclined rearwardly downward relative to a horizontal axis.

## Patentansprüche

1. Trommel-Waschmaschine, umfassend ein äußeres Gehäuse (1), eine Wasserwanne (3), die in dem äußeren Gehäuse (1) vorgesehen ist, eine trommelartige sich drehende Wanne (10), die zur Drehung in der Wasserwanne (3) vorgesehen ist, wobei die sich drehende Wanne (10) eine Vorderseite sowie eine Rückseite aufweist, einen elektrischen Motor (17), der die sich drehende Wanne (10) antreibt, ein elastisches Abstützelement (4A, 4B, 61, 66, 67, 68), welches die Wasserwanne (3) elastisch abstützt, sowie ein Beladungselement (33), das das Abstützelement (4A, 4B, 61, 66, 67, 68) belastet und das ein Gravitationszentrum (CG) aufweist, das zwischen im Wesentlichen der Mitte (P) einer Dimension von der Vorderseite zur Rückseite der rotierenden Wanne (10) und der Rückseite der sich drehenden Wanne (10) platziert ist, wobei das elastische Abstützelement (4A, 4B, 61, 66, 67, 68) ein Paar elastischer Abstützelemente (61) beinhaltet, die die Wasserwanne (3) entweder an einem Ort (CGh), der im Wesentlichen der gleiche wie das Gravitationszentrum (CG) des Beladungselements (33) ist, oder an einem Ort vor dem Gravitationszentrum (CG) des Beladungselements (33), abstützt, **dadurch gekennzeichnet, dass** das Paar elastischer Abstützelemente (61) jeweilige Abschnitte (CGh) beinhaltet, auf denen die Wasserwanne (3) abgestützt ist, wobei die Abschnitte (CGh) zwischen dem Gravitationszentrum (CG) des Beladungselements (33) und einem anderen Gravitationszentrum (CGf) des Beladungselements (33) in einem Fall platziert ist, in dem eine erlaubte Menge an Wäsche in der sich drehenden Wanne (10) aufgenommen ist.

2. Trommel-Waschmaschine gemäß Anspruch 1, **gekennzeichnet durch** eine Auflageanordnung (14, 15, 16), die an der Rückseite der Wasserwanne (3) zum Abstützen der sich drehenden Wanne (10) für deren Drehung vorgesehen ist, und **dadurch gekennzeichnet, dass** das Beladungselement (33) zumindest die Wasserwanne (3), die sich drehende Wanne (10), die Auflage-Anordnung (14, 15, 16) sowie den Motor (17) beinhaltet.

3. Trommel-Waschmaschine gemäß Anspruch 1, **dadurch gekennzeichnet, dass** entweder die Wasserwanne (3) oder die sich drehende Wanne (10) mit einem Gegengewicht (31, 32) versehen ist, das im Wesentlichen vor der Mitte der Dimension von der Vorderseite zur Rückseite der sich drehenden Wanne (10) angeordnet ist.

4. Trommel-Waschmaschine gemäß Anspruch 1, **gekennzeichnet durch** ein Begrenzungselement (62, 63) was die Vorwärts- und Rückwärts-Bewegung der Wasserwanne (3) begrenzt.

5. Trommel-Waschmaschine gemäß Anspruch 1, **gekennzeichnet durch** einen Stabilisator (64), der an der Vorderseite der sich drehenden Wanne (10) vorgesehen ist.

6. Trommel-Waschmaschine gemäß Anspruch 1, **dadurch gekennzeichnet, dass** die sich drehende Wanne (10) eine Rotationsachse aufweist, die in Bezug auf eine horizontale Achse nach hinten und unten geneigt ist.

## Revendications

1. Machine à laver du type à tambour comprenant une enceinte externe (1), un bac d'eau (3) agencée dans l'enceinte externe (1), un bac rotatif du type tambour (10) destinée à tourner dans le bac d'eau (3), le bac rotatif (10) comportant une partie avant et une partie arrière, un moteur électrique (17) entraînant le bac rotatif (10), un élément de support élastique (4A, 4B, 61, 66, 67, 68) supportant de manière élastique le bac d'eau (3), et un élément de chargement (33) chargeant l'élément de support (4A, 4B, 61, 66, 67, 68) et comportant un centre de gravité CG situé entre approximativement le centre P d'une dimension allant de la partie avant vers la partie arrière du bac rotatif (10) et la partie arrière du bac rotatif (10), l'élément de support élastique (4A, 4B, 61, 66, 67, 68) englobant une paire d'éléments de support élastiques (61), supportant le bac d'eau (3) soit au niveau d'un emplacement CGh correspondant pratiquement au centre de gravité CG de l'élément de chargement (33), ou au niveau d'un emplacement situé devant le centre de gravité CG de l'élément de chargement (33), **caractérisée en ce que** la paire d'éléments de support élastiques (61) incluent des parties respectives CGh sur lesquelles est supporté le bac d'eau (3), les parties CGh étant situées entre le centre de gravité CG de l'élément de chargement (33) et un autre centre de gravité CGf de l'élément de chargement (33au cas où une quantité admissible de linge est logée dans le bac rotatif (10).

2. Machine à laver du type à tambour selon la revendication 1, **caractérisée par** un assemblage de support (14, 15, 16) agencé sur la partie arrière du bac d'eau (3) pour supporter le bac rotatif (10) en vue de la rotation, et **caractérisée en ce que** l'élément de chargement (33) inclut au moins le bac d'eau (3), le bac rotatif (10), l'assemblage de support (14, 15, 16) et le moteur (17).

3. Machine à laver du type à tambour selon la revendication 1, **caractérisée en ce que** le bac d'eau (3) ou le bac rotatif (10) comporte un contrepoids (31, 32) agencé à l'avant du centre approximatif de la dimension allant de la partie avant vers la partie arrière du bac rotatif (10).

4. Machine à laver du type à tambour selon la revendication 1, **caractérisé par** un élément de limitation (62, 63), limitant un déplacement vers l'arrière et vers l'avant de le bac d'eau (3).

5. Machine à laver du type à tambour selon la revendication 1, **caractérisée par** un dispositif d'équilibrage (64) agencé sur la partie avant du bac rotatif (10).

6. Machine à laver du type à tambour selon la revendication 1, **caractérisée en ce que** le bac rotatif (10) comporte un axe de rotation incliné vers l'arrière et vers le bas par rapport à un axe horizontal.
